(19) Europäisches Patentamt
European Patent Office
Office européen des brevets

(11) EP 4 787 148 A2

# (12) EUROPEAN PATENT APPLICATION

(43) Date of publication:
05.08.2026 Bulletin 2026/32

(21) Application number: 26150751.1

(22) Date of filing: 08.01.2026

(51) International Patent Classification (IPC):
G06F 7/58 (2006.01)     H04L 9/08 (2006.01)

(52) Cooperative Patent Classification (CPC):
G06F 7/588; H04L 9/0852; H04L 9/0869

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 09.01.2025 CN 202510031152

(71) Applicants:
• Hefei National Laboratory
  Hefei 230088 (CN)
• University of Science and Technology of China
  Anhui 230026 (CN)

(72) Inventors:
• BAI, Bing
  Hefei, Anhui, 230088 (CN)

• WENG, Zixuan
  Hefei, Anhui, 230088 (CN)
• QIAO, Guanru
  Hefei, Anhui,, 230088 (CN)
• NIE, Youqi
  Hefei, Anhui, 230088 (CN)
• TANG, Chenyu
  Hefei, Anhui, 230088 (CN)
• LIU, Naile
  Hefei, Anhui, 230088 (CN)
• ZHANG, Jun
  Hefei, Anhui, 230088 (CN)
• PAN, Jianwei
  Hefei, Anhui, 230088 (CN)

(74) Representative: Patentanwälte Geyer, Fehners &
Partner mbB
Perhamerstrasse 31
80687 München (DE)

## (54) FABRICATION METHOD, QUANTUM RANDOM NUMBER SECURITY CHIP, AND METHOD FOR GENERATING QUANTUM KEY

(57) The present disclosure provides a fabrication method, a quantum random number security chip, and a method for generating a quantum key, which mainly relate to the field of quantum random number generation technology. The fabrication method includes: providing a quantum entropy source die and a security processing module on a first surface of a substrate and a second surface of the substrate respectively to form a three-dimensional stacked structure, where a plurality of copper pillars are disposed on the second surface of the substrate; performing a molding process on the first surface of the substrate and the second surface of the substrate to obtain an encapsulation structure encapsulating the substrate, where the plurality of copper pillars have bumps exposed outside the encapsulation structure; and rerouting a substrate pad disposed on the second surface of the substrate to a fan-out region of the substrate by using a wafer-level fan-out method, such that the bumps of the plurality of copper pillars exposed outside the encapsulation structure serve as external pins of the quantum random number security chip, thereby obtaining the quantum random number security chip.

FIG. 2

EP 4 787 148 A2

**Description**

TECHNICAL FIELD

The present disclosure relates to the field of quantum random number generation technology, and more particularly, to a fabrication method, a quantum random number security chip, and a method for generating a quantum key.

BACKGROUND

A quantum random number generator needs to have characteristics such as a compact size, a high random number generation rate, and a strong stability. An optical chip solution based on vacuum state fluctuation measurement eliminates the need for optical interferometers and has a simple optical structure with stable light emission. This facilitates more compact integration on a single silicon chip as well as encapsulation, allowing direct on-chip quantum state measurement and thus presenting the most promising application prospects.

An optical chip based on vacuum state fluctuation measurement typically includes a quantum entropy source chip and a post-processing unit. However, since the quantum entropy source chip and the post-processing unit are mostly implemented as subsystems fabricated using different processes and materials, conventional packaging technologies struggle to integrate these two process-incompatible devices within a limited space. Moreover, the quantum entropy source chip itself includes a variety of active and passive devices and optical waveguide structures, resulting in a large volume and an irregular three-dimensional shape.

SUMMARY

In view of this, the present disclosure provides a fabrication method, a quantum random number security chip, and a method for generating a quantum key.

In an aspect of the present disclosure, a method for fabricating a quantum random number security chip is provided, including: providing a quantum entropy source die and a security processing module on a first surface of a substrate and a second surface of the substrate respectively to form a three-dimensional stacked structure, where a plurality of copper pillars are disposed on the second surface of the substrate; performing a molding process on the first surface of the substrate and the second surface of the substrate to obtain an encapsulation structure encapsulating the substrate, where the plurality of copper pillars have bumps exposed outside the encapsulation structure; and rerouting a substrate pad disposed on the second surface of the substrate to a fan-out region of the substrate by using a wafer-level fan-out method, such that the bumps of the plurality of copper pillars exposed outside the encapsulation structure serve as external pins of the quantum random number security chip, thereby obtaining the quantum random number security chip.

According to embodiments of the present disclosure, the security processing module includes a security processor die and a signal amplifier die, and the providing a quantum entropy source die and a security processing module on a first surface of a substrate and a second surface of the substrate respectively includes: providing the security processor die and the signal amplifier die on the second surface of the substrate, such that a bonding pad of the security processor die and a bonding pad of the signal amplifier die face the same direction as the substrate pad disposed on the second surface of the substrate.

According to embodiments of the present disclosure, the method further includes: bonding a bonding pad of the quantum entropy source die, the bonding pad of the security processor die, and the bonding pad of the signal amplifier die to the plurality of copper pillars respectively by using a bonding process.

According to embodiments of the present disclosure, the method further includes: implanting a solder ball onto the substrate pad disposed on the second surface of the substrate in a case where the encapsulation structure has a leadless package form; and providing a metal lead on the substrate pad disposed on the second surface of the substrate to establish a connection between the quantum random number security chip and an external circuit in a case where the encapsulation structure has a flat lead package form.

According to embodiments of the present disclosure, a material of the substrate includes an epoxy resin material.

In another aspect of the present disclosure, a quantum random number security chip fabricated by the method described above is provided, where the quantum random number security chip includes a quantum entropy source chip and a security processing module connected to each other; where the quantum entropy source chip is configured to convert an optical signal of a continuous light source into an electrical signal, and process the electrical signal based on a homodyne detection method to generate a quantum entropy source analog signal; and where the security processing module is configured to perform randomness extraction on the quantum entropy source analog signal generated by the quantum entropy source chip to obtain quantum random numbers, and perform encryption and decryption processing on the quantum random numbers to obtain a target quantum key.

According to embodiments of the present disclosure, the quantum entropy source chip includes a light source generation unit, an optical beam splitter, a photodetector, and a transimpedance amplifier connected in sequence, where the light source generation unit is configured to generate the continuous light source and input the continuous light source to the optical beam splitter; where the optical beam splitter is configured to split the continuous light source into two paths and input the two paths to the photodetector respectively, where a first input end of the optical beam splitter is configured to receive the continuous light source, and a second input end of the optical beam splitter is left unconnected to serve as a vacuum state input end; where the photodetector includes a first photodetector and a second photodetector respectively configured to convert the optical signal of the continuous light source into a first electrical signal and a second electrical signal, so as to perform a homodyne detection on the first electrical signal and the second electrical signal to obtain a current difference between output signals; and where the transimpedance amplifier is configured to amplify the current difference between the output signals to obtain the quantum entropy source analog signal.

According to embodiments of the present disclosure, the security processing module includes a signal amplifier chip and a security processor chip, an input end of the signal amplifier chip is connected to an output end of the transimpedance amplifier within the quantum entropy source chip, and an output end of the signal amplifier chip is connected to an input end of the security processor chip; the signal amplifier chip is configured to receive the quantum entropy source analog signal and amplify the quantum entropy source analog signal to obtain a quantum entropy source random signal; and the security processor chip includes an analog-to-digital converter, a digital-to-analog converter, a randomness extraction unit, and an encryption processing unit, where the analog-to-digital converter is configured to convert the quantum entropy source random signal into a digital signal and send the digital signal for the quantum entropy source random signal to the randomness extraction unit; the randomness extraction unit is configured to perform randomness extraction on the digital signal for the quantum entropy source random signal to generate quantum random numbers; and the encryption processing unit is configured to perform encryption and decryption processing on the quantum random numbers to obtain the target quantum key.

According to embodiments of the present disclosure, the target quantum key includes any one of: a shared key pair for symmetric cryptography, a public-private key pair for asymmetric cryptography, or a temporary key for hybrid cryptography.

In yet another aspect of the present disclosure, a method for generating a quantum key based on quantum random numbers is provided, applicable to the quantum random number security chip described above. The method for generating a quantum key based on quantum random numbers includes: in response to receiving a quantum key generation request, converting an optical signal of a continuous light source into an electrical signal; processing the electrical signal of the continuous light source based on a homodyne detection method to generate a quantum entropy source analog signal; performing randomness extraction on the quantum entropy source analog signal to obtain quantum random numbers; and performing encryption and decryption processing on the quantum random numbers to obtain a target quantum key.

According to embodiments of the present disclosure, wafer-level fan-out and molding processes are employed on an optoelectronic hybrid integrated die to form a complete system-in-package chip. By integrating the quantum entropy source chip and the security processing module on opposite sides of the substrate, a three-dimensional stacked structure is formed, which not only reduces a horizontal area of the packaged chip but also enhances space utilization. Furthermore, copper pillars are disposed on the bottom surface of the substrate to form bumps, such that the circuit layer is positioned on the second surface of the substrate. A wafer-level fan-out process is then employed to reroute the pads across the entire encapsulation layer to the fan-out region around a periphery of the substrate, thereby achieving the function of transmitting signals across the encapsulation layer.

BRIEF DESCRIPTION OF THE DRAWINGS

Through the following description of embodiments of the present disclosure with reference to the accompanying drawings, the above and other objectives, features and advantages of the present disclosure will become more apparent. In the accompanying drawings:

FIG. 1 shows a flowchart of a method for fabricating a quantum random number security chip according to an embodiment of the present disclosure;

FIG. 2 shows a schematic diagram of a packaged quantum random number security chip according to an embodiment of the present disclosure;

FIG. 3 shows a schematic diagram of a quantum random number security chip according to an embodiment of the present disclosure;

FIG. 4 shows a schematic diagram of a workflow of a quantum random number security chip according to an embodiment of the present disclosure;

FIG. 5 shows a schematic diagram of a workflow of an encryption processing unit according to an embodiment of the present disclosure;

FIG. 6 shows a schematic diagram of a symmetric encryption method according to a specific embodiment of the present disclosure;

FIG. 7 shows a schematic diagram of a symmetric decryption method according to a specific embodiment of the present disclosure;

FIG. 8 shows a schematic diagram of an asymmetric key pair generation method according to a specific embodiment of the present disclosure;

FIG. 9 shows a schematic diagram of an asymmetric key pair generation method according to another specific embodiment of the present disclosure;

FIG. 10 shows a flowchart of a method for generating a quantum key based on quantum random numbers according to an embodiment of the present disclosure; and

FIG. 11 shows a block diagram of an apparatus for generating a quantum key based on quantum random numbers according to an embodiment of the present disclosure.

DETAILED DESCRIPTION OF EMBODIMENTS

Embodiments of the present disclosure will be described below with reference to the accompanying drawings. However, it should be understood that these descriptions are merely exemplary and are not intended to limit the scope of the present disclosure. In the following detailed description, for ease of interpretation, many specific details are set forth to provide comprehensive understanding of embodiments of the present disclosure. However, it is clear that one or more embodiments may also be implemented without these specific details. Moreover, in the following description, descriptions of well-known structures and technologies are omitted to avoid unnecessarily obscuring concepts of the present disclosure.

Terms are used herein for the purpose of describing specific embodiments only and are not intended to limit the present disclosure. The terms "including", "containing", etc. used herein indicate the presence of the feature, step, operation and/or component, but do not exclude the presence or addition of one or more other features, steps, operations or components.

All terms used herein (including technical and scientific terms) have the meanings generally understood by those skilled in the art, unless otherwise defined. It should be noted that the terms used herein shall be interpreted to have meanings consistent with the context of this specification, and shall not be interpreted in an idealized or overly rigid manner.

In a case of using the expression similar to "at least one of A, B, or C", it should be explained according to the meaning of the expression generally understood by those skilled in the art (for example, "a system including at least one of A, B, or C" should include but not be limited to a system including A alone, a system including B alone, a system including C alone, a system including A and B, a system including A and C, a system including B and C, and/or a system including A, B, and C).

Random numbers are a widely used fundamental resource with extensive and critical applications across numerous fields, such as cryptography, numerical computation, neural network computing, traditional information security, and quantum communication. A quantum random number generator operates based on fundamental principles of quantum physics, and quantum random numbers produced by a quantum random number generator exhibit unpredictability and non-repeatability. Compared with traditional pseudorandom number generators and noise source random number generators, the quantum random number generator offers a clearer origin of randomness, and the randomness may be rigorously proven using minimum entropy theory. Therefore, the quantum random number generator offers higher security and is particularly suitable for application scenarios with high requirements for randomness.

Current quantum random number generators may be implemented using a variety of schemes, such as photon path selection scheme, photon arrival time scheme, laser phase fluctuation scheme, and vacuum state fluctuation measurement scheme. From a practical perspective, a quantum random number generator needs to have characteristics such as a compact size, a high random number generation rate, and a high stability. An optical chip solution based on vacuum state fluctuation measurement eliminates the need for optical interferometers and has a simple optical structure with stable light emission. This facilitates more compact integration on a single silicon chip as well as encapsulation, allowing direct on-chip quantum state measurement and thus presenting the most promising application prospects.

An optical chip based on vacuum state fluctuation measurement typically includes a quantum entropy source chip and a post-processing unit. However, since the quantum entropy source chip and the post-processing unit are mostly implemented as subsystems fabricated using different processes and materials, conventional packaging technologies struggle to integrate these two process-incompatible devices within a limited space. Moreover, the quantum entropy source chip itself includes a variety of active and passive devices and optical waveguide structures, resulting in a large volume and an irregular three-dimensional shape.

Furthermore, during the post-processing of quantum random numbers, a security chip may be employed to encrypt and decrypt the generated quantum random numbers. In the prior art, a security chip typically has a built-in classical true random number generator (TRNG). Such a true random number generator based on classical physics commonly utilizes thermal noise or jitter from unstable oscillators as entropy sources for true random numbers. After extraction, true random numbers may be generated and serve as a random number source for cryptographic algorithms.

Due to the unpredictability, non-repeatability, unbiasedness and other characteristics of quantum random numbers, a vacuum state quantum random number generation method may provide a new solution for the random number source of security chips compared with classical true random number generators. This method may generate a vacuum state quantum random number source with sufficiently high and stable entropy values. Moreover, the randomness stems from inherent physical random processes within quantum systems, providing strong security guarantee for key generation.

However, some standalone quantum random number generator chips are already available on the market. To utilize these quantum random numbers for security chips, both the security chip and the quantum random number generator chip need to be disposed on the same circuit board, and communicate with each other via board-level traces. However, if a random number generator and a cryptographic algorithm execution device belong to different devices, the board-level connection between the two could become an entry point for attackers to steal information. In a long printed circuit board trace, signals carrying raw random numbers may inevitably generate electromagnetic radiation, creating opportunities for side-channel attacks.

In view of this, in embodiments of the present disclosure, wafer-level fan-out and molding processes are employed on an optoelectronic hybrid integrated die to form a complete system-in-package chip. By integrating a quantum entropy source chip and a security processing module on opposite sides of a substrate, a three-dimensional stacked structure is formed, which not only reduces a horizontal area of the packaged chip but also enhances space utilization. Furthermore, copper pillars are disposed on the bottom surface of the substrate to form bumps, such that the circuit layer is positioned inside the substrate. A wafer-level fan-out process is then employed to reroute the pads across the entire encapsulation layer to the fan-out region around a periphery of the substrate, thereby achieving the function of transmitting signals across the encapsulation layer.

Specifically, an embodiment of the present disclosure provides a method for fabricating a quantum random number security chip, including: providing a quantum entropy source die and a security processing module on a first surface of a substrate and a second surface of the substrate respectively to form a three-dimensional stacked structure, where a plurality of copper pillars are disposed on the second surface of the substrate; performing a molding process on the first surface of the substrate and the second surface of the substrate to obtain an encapsulation structure that encapsulates the substrate; and rerouting a substrate pad disposed on the second surface of the substrate to a fan-out region of the substrate by using a wafer-level fan-out method, such that the bumps of the plurality of copper pillars exposed outside the encapsulation structure serve as external pins of the quantum random number security chip, thereby obtaining the quantum random number security chip.

It should be noted that the fabrication method, the quantum random number security chip, and the quantum key generation method determined by embodiments of the present disclosure may be applied to the field of quantum random number technology, such as the field of quantum random number generation technology. The fabrication method, the quantum random number security chip, and the quantum key generation method determined by embodiments of the present disclosure may be further applied to any field other than the field of quantum random number technology, such as the field of quantum computer technology. The application fields of the fabrication method, the quantum random number security chip, and the quantum key generation method determined by embodiments of the present disclosure are not limited.

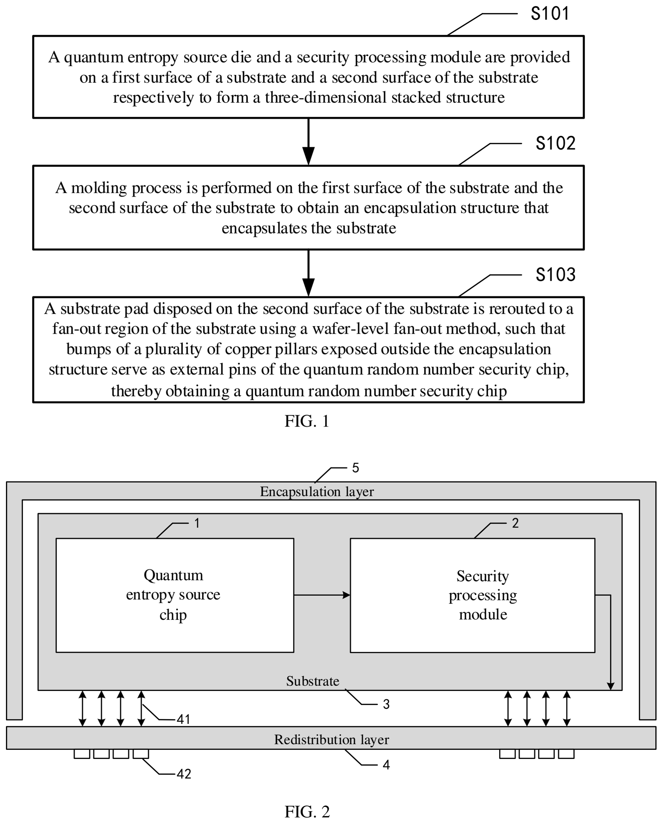

FIG. 1 shows a flowchart of a method for fabricating a quantum random number security chip according to an embodiment of the present disclosure.

As shown in FIG. 1, the fabrication method includes operation S101 to operation S103.

In operation S101, a quantum entropy source die and a security processing module are provided on a first surface of a substrate and a second surface of the substrate respectively to form a three-dimensional stacked structure.

In operation S102, a molding process is performed on the first surface of the substrate and the second surface of the substrate to obtain an encapsulation structure that encapsulates the substrate.

In operation S103, a substrate pad disposed on the second surface of the substrate is rerouted to a fan-out region of the substrate using a wafer-level fan-out method, such that bumps of a plurality of copper pillars exposed outside the encapsulation structure serve as external pins of the quantum random number security chip, thereby obtaining a quantum random number security chip.

According to embodiments of the present disclosure, the substrate may serve as a carrier for the quantum entropy source die and the security processing module to integrate all components included in the quantum entropy source die and the security processing module, and provide circuit interconnections between the chips and components to achieve an optoelectronic hybrid integration. Here, the quantum entropy source die and the dies included in the security processing module may be obtained by dicing and testing wafers.

Here, the quantum entropy source die may include optoelectronic devices required for generating quantum entropy source analog signals. The security processing module may include a security processor die and a signal amplifier die.

According to embodiments of the present disclosure, the substrate may include a first surface and a second surface. In a specific embodiment of the present disclosure, a three-dimensional stacked structure may be adopted, in which the quantum entropy source die is attached to the first surface via an adhesive, and the security processor die and the signal amplifier die included in the security processing module may be attached to the second surface via an adhesive, thereby achieving a three-dimensional device layout. Preferably, the substrate material may be an epoxy resin material, and the adhesive material may be a non-conductive epoxy adhesive.

According to embodiments of the present disclosure, the use of security processor chip and signal amplifier chip in die form may reduce chip volume, lower costs, and decrease wiring complexity.

According to embodiments of the present disclosure, a bonding pad (PAD) of the quantum entropy source die may be configured to face the same direction as the substrate pad disposed on the first surface of the substrate, while a bonding pad (PAD) of the security processor die and a bonding pad of the signal amplifier die included in the security processing module may be configured to face the same direction as the substrate pad disposed on the second surface of the substrate.

According to embodiments of the present disclosure, a plurality of copper pillars are disposed on a side of the second surface of the substrate where the security processor die and the signal amplifier die are provided, such that the plurality of copper pillars form bumps for signal extraction.

According to embodiments of the present disclosure, the method for fabricating the quantum random number security chip further includes: bonding the bonding pad of the quantum entropy source die, the bonding pad of the security processor die, and the bonding pad of the signal amplifier die to the bumps located on the second surface of the substrate by using a bonding process, thereby achieving an electrical connection between the quantum entropy source die, the security processor die and the signal amplifier die. Here, a bonding wire may be made of a gold wire material.

According to embodiments of the present disclosure, the method for fabricating the quantum random number security chip further includes: dispensing molding materials onto the first surface of the substrate and the second surface of the substrate by using a molding process to obtain a double-sided encapsulation structure that encapsulates the substrate.

According to embodiments of the present disclosure, the method for fabricating the quantum random number security chip further includes: grinding an encapsulation layer on the second surface of the substrate until the bumps of the copper pillars are exposed from the encapsulation layer.

According to embodiments of the present disclosure, a wafer-level fan-out method is utilized to reroute the substrate pad disposed on the second surface of the substrate to a fan-out region around the substrate and at a bottom of the substrate, or to guide signals from the bumps of the plurality of copper pillars disposed on the second surface of the substrate to the fan-out region around the substrate, thereby forming a redistribution layer. External connection pads are rearranged to appropriate positions, so that the pads originally covered by the encapsulation layer may be connected to new pads in the fan-out region around the substrate through an internal wiring layer. This allows the copper pillars to serve as external pins of the quantum random number security chip. These external pins not only provide physical connection points to external circuits but also ensure signal transmission across the encapsulation layer.

According to embodiments of the present disclosure, the wafer-level fan-out technology increases the number of I/O connections by designing routing for I/O contact points in regions beyond the chip dimensions and fully utilizes the effective area of the chip. This technology may shorten signal transmission distances, improve electrical performance, and allow for more complex system integration.

According to embodiments of the present disclosure, the method for fabricating the quantum random number security chip further includes: in a case where the double-sided encapsulation structure has a leadless package form, implanting a solder ball onto the substrate pad disposed on a side of the redistribution layer; and in a case where the double-sided encapsulation structure has a flat-lead package form, providing a metal lead on the substrate pad disposed on the side of the redistribution layer to ensure a connection between the quantum random number security chip and an external circuit, thereby obtaining the quantum random number security chip based on the wafer-level fan-out packaging technology.

FIG. 2 shows a schematic diagram of a packaged quantum random number security chip according to an embodiment of the present disclosure.

As shown in FIG. 2, the quantum random number security chip packaged based on the wafer-level fan-out packaging technology includes a quantum entropy source chip 1, a security processing module 2, a substrate 3, a redistribution layer 4, and an encapsulation layer 5. The quantum entropy source chip 1 and the security processing module 2 connected in sequence are integrated on the first surface and the second surface of the substrate 3 respectively. In a specific embodiment, the horizontal area of the quantum random number security chip obtained by this fabrication method is reduced to 50% of that in a planar layout scheme.

As shown in FIG. 2, the redistribution layer 4 includes metal traces 41 and metal pads 42. The redistribution layer is used to connect all signal networks within the substrate 3 that require interconnection with the external environment. Specifically, the wafer-level fan-out technology is utilized to reroute the bumps of the plurality of copper pillars disposed on the substrate 3 that need external interconnection to the fan-out region, and finally connecting the bumps to the metal pads 42. The bumps of the plurality of copper pillars across the encapsulation layer 5 are exposed to outside the encapsulation layer 5 to serve as external pins of the quantum random number security chip.

As shown in FIG. 2, by using a molding process, the first surface and the second surface of the substrate 3 are encapsulated with epoxy resin encapsulation material to form an encapsulation layer 5, thereby providing a package shell for the chip. The encapsulation layer 5 further provides physical support and mechanical protection for the quantum entropy source chip 1 and the security processing module 2, thereby achieving optoelectronic integration with high stability, small size, and low noise. In a specific embodiment, the quantum random number security chip obtained by this fabrication method significantly reduces volume while lowering costs. Compared with existing solutions of using a PCB board with soldering process combined with ceramic housing, the overall system volume is reduced by 20%.

Furthermore, since the encapsulation layer 5 has excellent thermal contact and thermal conduction properties, the heat dissipation performance of the chip may be enhanced, and an operating temperature range may be widened. Simultaneously, the epoxy resin used for molding may form a dense three-dimensional microstructure after curing, enabling the encapsulation layer 5 to provide good physical isolation for the substrate 3 and the dies, thereby reducing moisture erosion and widening an operating humidity range.

Based on this, in embodiments of the present disclosure, a complete system-in-package (SiP) chip is formed by applying wafer-level fan-out process and molding process to optoelectronic hybrid integrated dies. By integrating the quantum entropy source chip and the security processing module on opposite sides of the substrate, a three-dimensional stacked structure is formed, which not only reduces the horizontal area of the packaged chip but also improves space utilization. Moreover, by providing copper pillars on the bottom surface of the substrate to form bumps, the circuit layer may be positioned on the second surface of the substrate. Subsequently, the wafer-level fan-out process is utilized to reroute the pads across the entire encapsulation layer to the fan-out region around the substrate, thereby achieving the function of transmitting signals across the encapsulation layer.

According to embodiments of the present disclosure, a quantum random number security chip includes a quantum entropy source chip and a security processing module, and the quantum entropy source chip is connected to the security processing module. The quantum entropy source chip is configured to convert an optical signal of a continuous light source into an electrical signal, and process the electrical signal based on a homodyne detection method to generate a quantum entropy source analog signal. The security processing module is configured to perform randomness extraction on the quantum entropy source analog signal generated by the quantum entropy source chip to obtain quantum random numbers, and to perform encryption and decryption processing on the quantum random numbers to obtain a target quantum key.

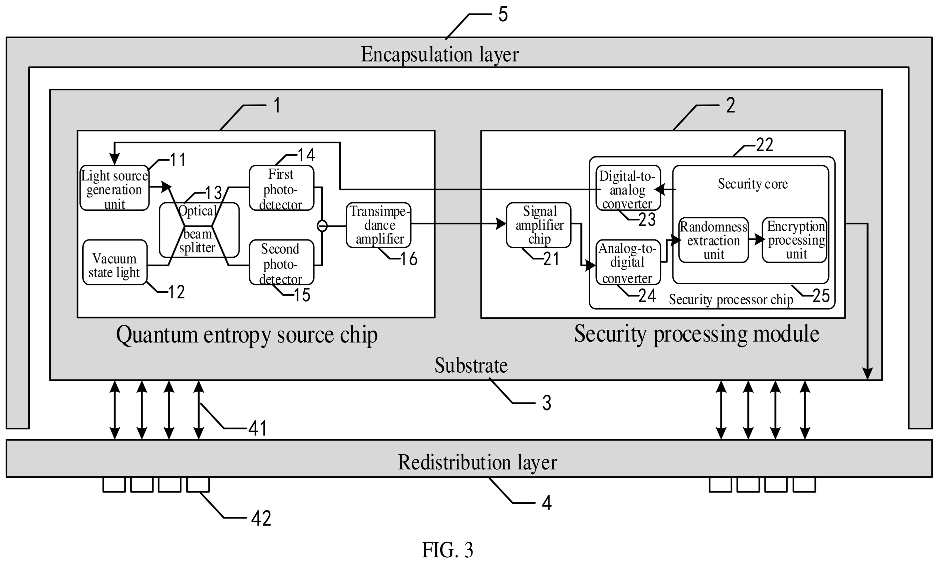

FIG. 3 shows a schematic diagram of a quantum random number security chip according to an embodiment of the present disclosure.

As shown in FIG. 3, a quantum entropy source chip 1 is in signal connection with a security processing module 2. The quantum entropy source chip 1 includes a light source generation unit 11, an optical beam splitter 13, a first photodetector 14, a second photodetector 15, and a transimpedance amplifier 16, all connected in sequence.

An output end of the light source generation unit 11 is connected to a first input end of the optical beam splitter 13. The light source generation unit 11 is configured to generate a continuous light source and input the continuous light source to the optical beam splitter 13. Preferably, the light source generation unit 11 may employ a laser chip to serve as an intrinsic light source.

The first input end of the optical beam splitter 13 is used to receive the continuous light source, and a second input end of the optical beam splitter 13 is left unconnected to serve as a vacuum state input end for receiving vacuum state light 12. The optical beam splitter 13 is configured to split the continuous light source into two paths, which are then output to the first photodetector 14 and the second photodetector 15 respectively.

An output end of the first photodetector 14 and an output end of the second photodetector 15 are both connected to an input end of the transimpedance amplifier 16. The first photodetector 14 and the second photodetector 15 are respectively configured to convert optical signals of the continuous light source into a first electrical signal and a second electrical signal, such that a homodyne detection is performed on the first electrical signal and the second electrical signal to obtain a current difference between output signals.

The transimpedance amplifier 16 is configured to amplify the current difference between the output signals to obtain a quantum entropy source analog signal, and transmit the quantum entropy source analog signal to the security processing module 2.

Based on this, in embodiments of the present disclosure, all the aforementioned components are integrated on a single quantum entropy source chip using hybrid integration technology to form a compact integrated assembly, including a light source, an optical path structure, and a detector.

As shown in FIG. 3, the security processing module 2 includes a signal amplifier chip 21 and a security processor chip 22. An input end of the signal amplifier chip 21 is connected to an output end of the transimpedance amplifier 16 of the quantum entropy source chip 1, and an output end of the signal amplifier chip 21 is connected to an input end of the security processor chip 22. The signal amplifier chip 21 is configured to receive the quantum entropy source analog signal and amplify the quantum entropy source analog signal to obtain a quantum entropy source random signal.

As shown in FIG. 3, the security processor chip 22 includes a digital-to-analog converter 23, an analog-to-digital converter 24, and a security core 25. The security core 25 includes a randomness extraction unit and an encryption processing unit.

An input end of the analog-to-digital converter 24 is connected to an output end of the signal amplifier chip 21, and an output end of the analog-to-digital converter 24 is connected to an input end of the security core 25. The analog-to-digital converter 24 is configured to quantize the amplified quantum entropy source random signal, convert it into a digital signal, and send the digital signal for the quantum entropy source random signal to the security core 25.

The security core 25 is configured to perform regulation and control of the entire quantum random number security chip, while simultaneously processing the quantized quantum entropy source random signal in real time. It performs various encryption and decryption workflows according to user commands and programs, enabling data encryption/decryption and information exchange. Preferably, the security core 25 may employ a security processor equipped with built-in randomness extraction programs and universal cryptographic algorithms to achieve an integrated process from random number generation to encryption/decryption, thereby enhancing security.

Here, an input end of the randomness extraction unit is connected to an output end of the analog-to-digital converter 24, and the randomness extraction unit is configured to perform randomness extraction on the digital signal for the quantum entropy source random signal to generate quantum random numbers.

An input end of the encryption processing unit is connected to an output end of the randomness extraction unit. The encryption processing unit may be used to perform encryption, decryption, and signature processing on the quantum random numbers to obtain a target quantum key.

An input end of the digital-to-analog converter 23 is connected to an output end of the security core 25 to receive a digital signal from the security core 25 and convert the digital signal into an analog signal for driving the light source generation unit 11 and adjusting the power of the light source generation unit 11.

Based on this, in embodiments of the present disclosure, the universal cryptographic algorithms and randomness extraction programs are embedded directly into the main control chip of the vacuum state quantum random number generator. This reduces the risk of data exposure during transmission and processing, facilitates more efficient encryption operations, and improves the overall system performance. Furthermore, by reducing the connection distance between the quantum entropy source and the security chip from the board level to the chip level, the line length is significantly reduced, the amplitude of electromagnetic signal leakage during transmission is lowered, and the difficulty of side-channel attacks is increased. Moreover, chip-level integration reduces external interfaces and connection wires, thereby decreasing potential points of electromagnetic leakage.

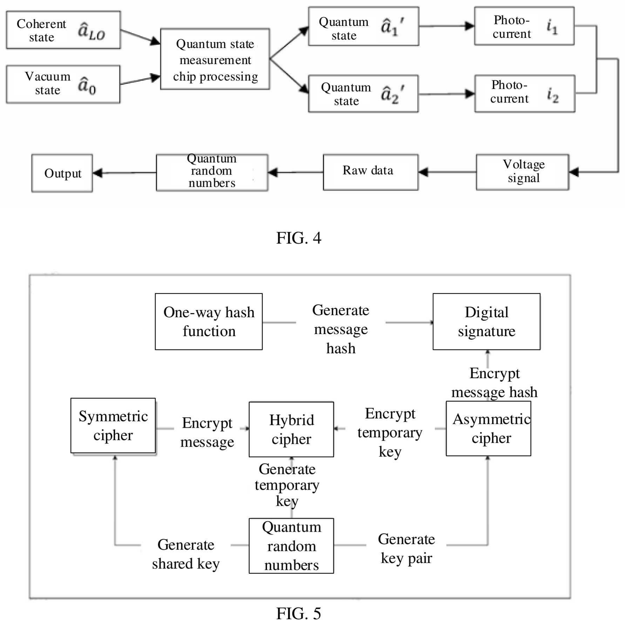

The working principle will be further explained below in conjunction with the schematic diagram of the workflow of the quantum random number security chip based on wafer-level fan-out packaging technology, as shown in FIG. 4.

FIG. 4 shows a schematic diagram of a workflow of a quantum random number security chip according to an embodiment of the present disclosure.

As shown in FIG. 4, in a quantum entropy source chip, one input signal is a continuous laser light provided by a laser chip, that is, a coherent state intrinsic optical signal $\hat{a}_{LO}$, and the other input signal is a vacuum state optical signal $\hat{a}_0$. The two input signals are separately input to the optical beam splitter. After processing by the on-chip integrated optical beam splitter, two different quantum state optical signals are output, including a first quantum state optical signal $\hat{a}_1'$ and a second quantum state optical signal $\hat{a}_2'$. The first quantum state optical signal $\hat{a}_1'$ and the second quantum state optical signal $\hat{a}_2'$ undergo photoelectric conversion respectively via the first photodetector and the second photodetector to obtain two photocurrent signals, including a first electrical signal $i_1$ and a second electrical signal $i_2$. The first electrical signal $i_1$ and the second electrical signal $i_2$ are input to the transimpedance amplifier, where the weak high-frequency current signal is amplified and converted into a voltage signal. The voltage signal is the quantum entropy source analog signal generated by quantum fluctuations.

As shown in FIG. 4, the quantum entropy source analog signal is input to the signal amplifier chip in the security processing module for signal amplification to obtain a quantum entropy source random signal. The quantum entropy source random signal enters the analog-to-digital converter within the security processor chip. After conversion, raw data is generated, which is then processed by the randomness extraction unit within the security processor chip to obtain quantum random numbers generated in real time. The output quantum random numbers may undergo cryptographic processing such as encryption, decryption, and signature within the security processing unit to obtain a target quantum key.

The working principle described above is further elaborated below. Quantum fluctuations exist in coherent state light fields, adhering to the minimum uncertainty principle in both amplitude and phase. The essence of random number generation is quantifying and extracting these coherent state quantum fluctuations. In embodiments of the present disclosure, two photodetector chips are utilized to generate random signals by measuring quantum fluctuations.

Specifically, one path from the laser chip serves as an input of a local oscillator light source (i.e., continuous laser), while the other path is left unconnected (i.e., vacuum state light). Assuming the two input quantum states are denoted as $\hat{a}_1$ and $\hat{a}_2$, and letting $\hat{a}_1 = |\alpha_{LO}>$ and $\hat{a}_2 = |0>$. After processing by the optical beam splitter, the quantum states of the two paths of output light are denoted as $\hat{a}_1'$ and $\hat{a}_2'$, satisfying Equation (1) and Equation (2) below.

$$\hat{a}_1' = \frac{\hat{a}_{LO} + \hat{a}_0}{\sqrt{2}} \tag{1}$$

$$\hat{a}_2' = \frac{\hat{a}_{LO} - \hat{a}_0}{\sqrt{2}} \tag{2}$$

wherein $\hat{a}_1'$ represents a first quantum state optical signal, $\hat{a}_2'$ represents a second quantum state optical signal, $\hat{a}_{LO}$ represents a coherent state intrinsic optical signal, $\hat{a}_0$ represents a vacuum state optical signal, $\hat{a}_1$ represents a quantum state of the coherent state intrinsic optical signal, and $\hat{a}_2$ represents a quantum state of the vacuum state optical signal. Here, $\hat{a}_0 = \hat{a}_2 = |0>$

The first quantum state optical signal $\hat{a}_1'$ and the second quantum state optical signal $\hat{a}_2'$ undergo photoelectric conversion respectively via the first photodetector and the second photodetector to obtain two photocurrent signals. The currents passing through the first photodetector and the second photodetector are expressed by Equation (3) and Equation (4) below.

$$i_1 = \hat{a}_1'^+\hat{a}_1' = \frac{k}{2}(\hat{a}_{LO}^+ + \hat{a}_0^+)(\hat{a}_{LO} + \hat{a}_0) \tag{3}$$

$$i_2 = \hat{a}_2'^+\hat{a}_2' = \frac{k}{2}(\hat{a}_{LO}^+ - \hat{a}_0^+)(\hat{a}_{LO} - \hat{a}_0) \tag{4}$$

wherein $i_1$ represents a first electrical signal, $i_2$ represents a second electrical signal, $k$ represents a quantum efficiency of the photodetector, $\hat{a}_1'^+\hat{a}_1'$ respectively correspond to light intensities input to the two photodetectors; the superscript "+" indicates the Hermitian conjugate of the quantum states of $\hat{a}_{LO}$ and $\hat{a}_0$.

Since the current value should be equal to the product of the quantum efficiency and the light intensity, the current difference between the two photocurrents may be expressed as Equation (5) below.

$$\Delta i = k(\hat{a}_{LO}^+\hat{a}_0 + \hat{a}_0^+\hat{a}_{LO}) \tag{5}$$

where $\Delta i$ represents the current difference between the two photocurrents.

Therefore, it may be proven that:

$$\langle\Delta i\rangle = 0 \ , \langle\Delta i^2\rangle = k^2|\hat{a}_0|^2 \tag{6}$$

where $\langle \Delta i^2 \rangle$ corresponds to the quantum noise $\sigma_q^2$. The quantum noise is manifested in the result of the balanced detection.

In a specific embodiment of the present disclosure, the noise distribution obtained by the data acquisition and post-processing circuit consists of two parts, including quantum noise $\sigma_q^2$ and classical noise $\sigma_e^2$, expressed as Equation (7) below.

$$\sigma_{total}^2 = \sigma_q^2 + \sigma_e^2 \tag{7}$$

where $\sigma_{total}^2$ represents the noise obtained by the data acquisition and post-processing circuit.

Since the continuous laser light generated by the laser is a coherent light source, the average number of photons may be denoted as $\mu$. For a coherent light source, the number of photons $n$ follows a Poisson distribution, and its distribution is given by Equation (8) below.

$$\mathrm{P}(n) = \left\| \left\langle n \middle| \frac{\alpha_{LO}}{\sqrt{2}} \right\rangle \right\|^2 = e^{-\mu} \frac{\mu^n}{n!} \tag{8}$$

where P($n$) represents the Poisson distribution.

Performing homodyne detection on the detection results of the first photodetector and the second photodetector yields the number of photons $n$ that follows a Skellam distribution, and its distribution is given by Equation (9) below.

$$p_k = P\left(n_1 - n_2 = k\right) = e^{-2\mu} I_k(2\mu) \tag{9}$$

where $p_k$ represents the Skellam distribution, $I_k(2\mu)$ represents the modified Bessel function; $n_1$ and $n_2$ respectively correspond to the average numbers of photons of the two paths of light, and are also two parameters of the Skellam distribution that determine the shape of this distribution.

In a specific embodiment of the present disclosure, the quantum noise distribution may be obtained through the above calculations. Since classical noise in the system follows a Gaussian distribution, the proportion of quantum noise may be calculated by measuring the classical noise $\sigma_e^2$ occurring when no light is input.

In a specific embodiment of the present disclosure, the minimum entropy is calculated based on the quantum noise distribution. Since randomness is quantified by the minimum entropy, and the random numbers from vacuum state fluctuations follow a Skellam distribution, $\boldsymbol{p_{max}}$ may be obtained through the aforementioned quantum noise variance $\sigma_q^2$, thereby calculating the minimum entropy. The minimum entropy may be defined as equation (10) below.

$$H_\infty = -\log_2 p_{max} \tag{10}$$

where $H_\infty$ represents the minimum entropy, and $\boldsymbol{p_{max}}$ represents the probability of the most likely outcome.

According to embodiments of the present disclosure, the minimum entropy of the aforementioned raw random numbers is calculated according to the measurement results, and the measurement results may be obtained in real time within the randomness extraction unit, thereby achieving an accurate estimation of the minimum entropy.

The specific operations of the randomness extraction program are described in detail below.

The randomness extraction program included in the randomness extraction unit is a method that extracts high-quality random bit sequences from raw random bit sequences through specific matrix operations. In a specific embodiment of the present disclosure, a Toeplitz matrix may be applied to process the raw random numbers, i.e., the quantum entropy source random signals obtained after analog-to-digital conversion. In the final randomness extraction process, a Toeplitz matrix algorithm based on the Fast Fourier Transform may be employed. With a matrix size of n × m, m bits of final random numbers may be extracted from n bits of raw quantum random number data, satisfying the relationship of n/m ≤ $H_\infty$.

Here, the Toeplitz matrix is a Universal Class hash function, with matrix elements composed of binary random bits. Its structure is illustrated below.

$$T = \begin{pmatrix} t_m & t_{m+1} & \cdots & t_{m+n-2} & t_{m+n-1} \\ t_{m-1} & t_m & \cdots & t_{m+n-3} & t_{m+n-2} \\ \cdots & \cdots & \cdots & \cdots & \cdots \\ t_2 & t_3 & \cdots & t_n & t_{n+1} \\ t_1 & t_2 & \cdots & t_{n-1} & t_n \end{pmatrix} \qquad (11)$$

where T represents the Toeplitz matrix, and $t_n$ represents an $n^{th}$ binary random bit.

In a specific embodiment of the present disclosure, for a raw random number sequence of length n, it only needs to be multiplied by an m×n Toeplitz matrix to obtain an extracted random sequence of length m, as shown in Equation (12) below.

$$\begin{pmatrix} t_m & t_{m+1} & \cdots & t_{m+n-2} & t_{m+n-1} \\ t_{m-1} & t_m & \cdots & t_{m+n-3} & t_{m+n-2} \\ \cdots & \cdots & \cdots & \cdots & \cdots \\ t_2 & t_3 & \cdots & t_n & t_{n+1} \\ t_1 & t_2 & \cdots & t_{n-1} & t_n \end{pmatrix} \times \begin{pmatrix} d_1 \\ d_2 \\ \cdots \\ d_{n-1} \\ d_n \end{pmatrix} = \begin{pmatrix} r_1 \\ r_2 \\ \cdots \\ r_{n-1} \\ r_n \end{pmatrix} \qquad (12)$$

Equation (12) may be written in simplified form as Equation (13) below.

$$D_r = T_{m,n} * D_d \qquad (13)$$

where $D_r$ represents an m-bit random bit sequence: $D_r = (r_1\, r_2 \ldots \ldots r_{n-1}\, r_n)^T$, $T_{m,n}$ represents an m×n Toeplitz matrix, and $D_d$ represents an n-bit raw random sequence:

$$D_d = \begin{pmatrix} d_1 & d_2 & \cdots & \cdots & d_{n-1} & d_n \end{pmatrix}^T .$$

As shown in Equation (13), by multiplying the Toeplitz matrix T with the raw random bit sequence $D_d$, the extracted random bit sequence $D_r$ may be obtained. Specifically, each element of the extracted random bit sequence is obtained by computing the dot product between a row of the Toeplitz matrix and the raw random bit sequence (i.e., performing a bitwise AND operation followed by summation, and then taking modulo 2 to obtain the final binary bit). Through the above processing, the final quantum random numbers from vacuum state fluctuations, i.e., the extracted random bit sequence $D_r$, may be obtained in real time. Its randomness originates from the fundamental principles of quantum physics and is provable within information theory.

Based on this, the quantum random number generator scheme based on vacuum state fluctuations provides a relatively simple optical structure and stable entropy output performance. On this basis, the use of wafer-level fan-out and molding processes may further reduce volume and lower costs.

According to embodiments of the present disclosure, the randomness extraction unit may also be executed by an arithmetic unit of the security processor chip. During the randomness extraction process, the arithmetic unit of the security processor may be used to perform the multiplication between the Toeplitz matrix and the raw random bit sequence, and output the extracted quantum random numbers.

According to embodiments of the present disclosure, a vacuum state quantum random number source with sufficiently high and stable entropy values may provide a strong security guarantee for key generation. The encryption processing unit in the security processor chip may perform encryption, decryption, and signature processing on the extracted quantum random numbers to generate different types of target quantum keys. The target quantum key may include any one of: a shared key pair for symmetric cryptography, a public-private key pair for an asymmetric cryptography, or a temporary key for hybrid cryptography.

The specific operations of the encryption processing unit are described in details below.

FIG. 5 shows a schematic diagram of a workflow of an encryption processing unit according to an embodiment of the present disclosure.

As shown in FIG. 5, in a specific embodiment of the present disclosure, the workflow of the encryption processing unit includes: performing key generation processing on the quantum random numbers using a symmetric key generation algorithm such as an AES key generation algorithm to obtain a shared key pair, and encrypting a message using the generated shared key pair and a symmetric encryption algorithm (such as an AES encryption algorithm) to obtain an encrypted message, i.e., a symmetric ciphertext.

As shown in FIG. 5, in another specific embodiment of the present disclosure, the workflow of the encryption processing unit may further include: performing key generation processing on the quantum random numbers to obtain a temporary key, which may be part of a symmetric key or an asymmetric key; and encrypting a message using the temporary key in combination with other encryption mechanisms (such as symmetric encryption or asymmetric encryption) to obtain a hybrid ciphertext.

As shown in FIG. 5, in yet another specific embodiment of the present disclosure, the workflow of the encryption processing unit may further include: performing key generation processing on the quantum random numbers using an asymmetric key generation algorithm such as an RSA or ECC key generation algorithm to obtain a public-private key pair, and encrypting a message using the generated public-private key pair and an asymmetric encryption algorithm to obtain an encrypted message, i.e., an asymmetric ciphertext.

In the aforementioned yet another specific embodiment, the workflow of the encryption processing unit may further include: performing encrypted message hashing based on the asymmetric ciphertext to obtain a digital signature. For example, a one-way hash function (such as SHA-256) may be used to hash the message to obtain a hash value of the message. The hash value of the message may be encrypted using the private key and an asymmetric encryption algorithm (such as a digital signature algorithm of RSA or ECC) to obtain a digital signature.

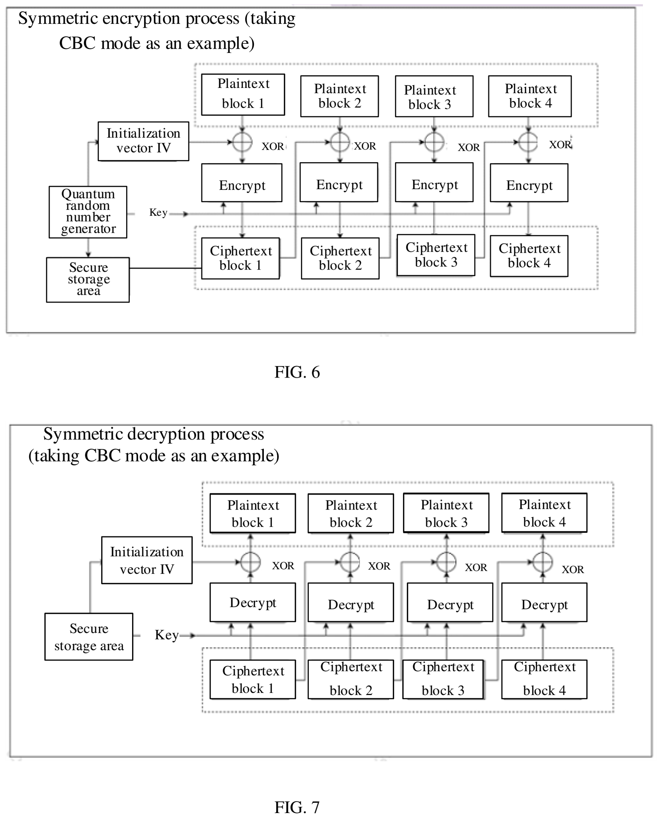

FIG. 6 shows a schematic diagram of a symmetric encryption method according to a specific embodiment of the present disclosure.

As shown in FIG. 6, a CBC mode is used as an example. A secure storage area may be used to store quantum random numbers generated by the quantum random number generator. The data is divided into blocks according to the encryption block size (for example, 128 bits or 16 bytes for AES; 64 bits or 8 bytes for DES). If the data length is not an integer multiple of the block size, padding is required to ensure that each block is of the same size. Next, a random initialization vector (IV) of the same size as the block is generated. The IV is used in both encryption and decryption processes and must be kept confidential. The function of the IV is to make the encryption process different for each message, even for identical plaintext blocks. An XOR operation is performed between a first set of data (plaintext block) and the IV. A result of the XOR operation is encrypted using an encryption algorithm (such as AES or DES) to obtain a first set of ciphertext. For each subsequent plaintext block, an XOR operation is performed between that plaintext block and a preceding ciphertext block, and then the result is encrypted using the encryption algorithm to obtain the ciphertext for the current plaintext block. All encrypted blocks are concatenated in their order to form the final ciphertext.

FIG. 7 shows a schematic diagram of a symmetric decryption method according to a specific embodiment of the present disclosure.

As shown in FIG. 7, a CBC mode is used as an example. Similar to the encryption process, the data (ciphertext) is divided into blocks according to the encryption block size. The same IV used during the encryption process is applied. A first set of ciphertext is decrypted, and then an XOR operation is performed between the first set of data and the IV to obtain a first set of plaintext. For each subsequent ciphertext block, it is first decrypted and then an XOR operation is performed between the decrypted data and a preceding ciphertext block (the preceding plaintext block in the decrypted plaintext sequence) to obtain the plaintext corresponding to the current ciphertext block. After decryption is completed, the padding needs to be removed to obtain the original plaintext data. All decrypted blocks are concatenated in their order to obtain the final plaintext.

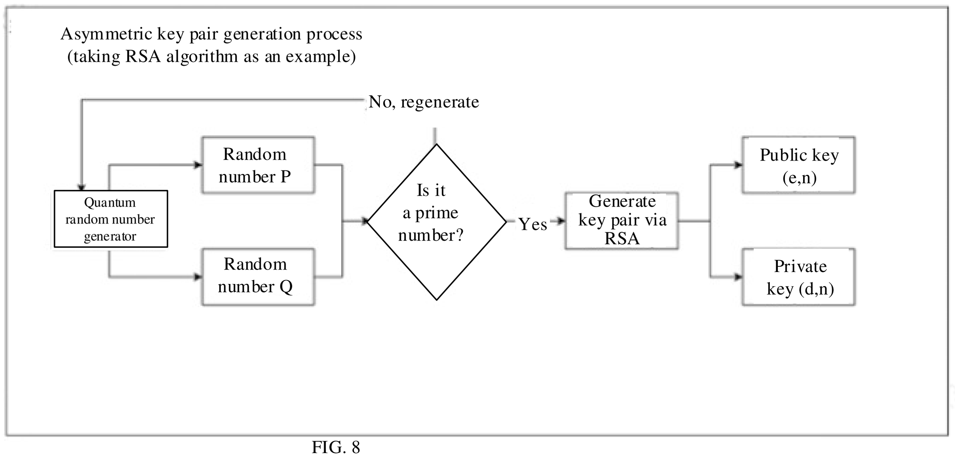

FIG. 8 shows a schematic diagram of an asymmetric key pair generation method according to a specific embodiment of the present disclosure.

As shown in FIG. 8, the RSA algorithm is used as an example. Two large random numbers P and Q are randomly selected. These two random numbers are typically generated randomly and are sufficiently large to ensure that their product is difficult to factorize. It is determined whether the random numbers P and Q are prime numbers. If both are prime numbers, a key pair may be generated using the RSA algorithm. If the determination result is negative, new random numbers are generated.

Specifically, the process of generating a key pair may include: calculating the product n of these two prime numbers, that is, $n=P\times Q$. Here, the modulus n is public and will become part of the public key. A value t is calculated using Euler's totient function $\phi(n)=(P-1)(Q-1)$, and the value t represents the number of positive integers less than or equal to n that are coprime with n. A small integer e is selected as the public exponent, and the integer e is coprime with $\phi(n)$ (that is, their greatest common divisor is 1), and e is less than $\phi(n)$ and greater than 1. In practical applications, e is often chosen as 65537 because it is a safe prime and offers good performance characteristics. An integer d is calculated such that $(d\times e)$ mod $\phi(n)=1$. The integer d is the private key exponent and must satisfy the above congruence equation. The calculation of d typically uses the extended Euclidean algorithm. The public key consists of the modulus n and the public key exponent e, denoted as (e, n). The private key consists of the modulus n and the private key exponent d, denoted as (d, n).

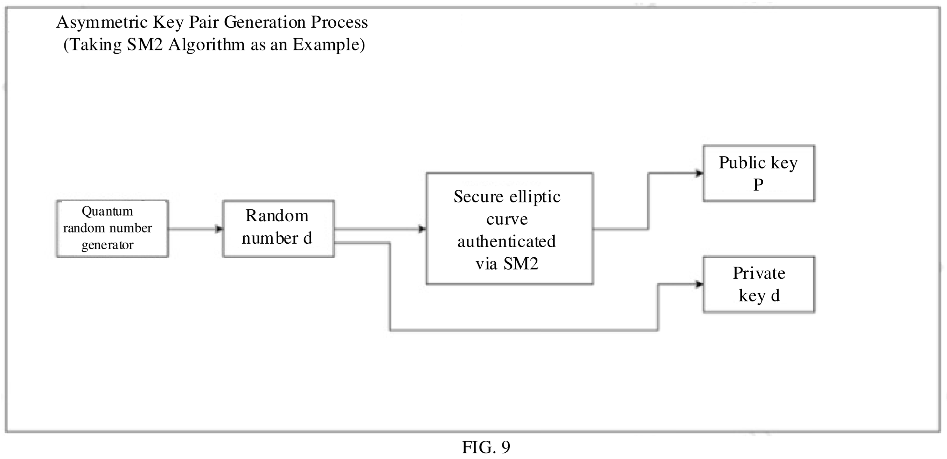

FIG. 9 shows a schematic diagram of an asymmetric key pair generation method according to another specific embodiment of the present disclosure.

As shown in FIG. 9, the SM2 algorithm is used as an example. An elliptic curve equation is selected. A base point G is chosen, which is a point on the elliptic curve with known coordinates. The order n of the elliptic curve is selected, which is a large prime number used to ensure the difficulty of the elliptic curve discrete logarithm problem. A random integer d is selected as the private key, which must be less than n and greater than 1, and needs to be kept confidential. A public key P is calculated using the private key d and the base point G according to the formula $P=d\times G$. Here, "$\times$" represents a scalar multiplication operation on the elliptic curve, i.e., using the private key d as the scalar multiplier to multiply the base point G by the private key d to obtain the public key P. The public key P consists of the coordinates of a point on the elliptic curve and may be public. The private key d is an integer and must be kept confidential.

In the present disclosure, the initialization of the quantum random number generator and the entire process of obtaining quantum random numbers may be encapsulated into simple commands within the security processor chip, enabling convenient integration with cryptographic algorithms. Users may develop functionalities tailored to their specific application scenarios based on this.

Accordingly, in embodiments of the present disclosure, cryptographic algorithms are applied to the main controller chip of the vacuum state quantum random number generator, thereby achieving integration of the quantum entropy source chip and the security processor chip. In this method, the connection between the quantum entropy source chip and the security processor chip is reduced from board level to chip level. The reduction in the order of magnitude of line length may significantly decrease the amplitude of electromagnetic leakage and increase the difficulty of side-channel attacks.

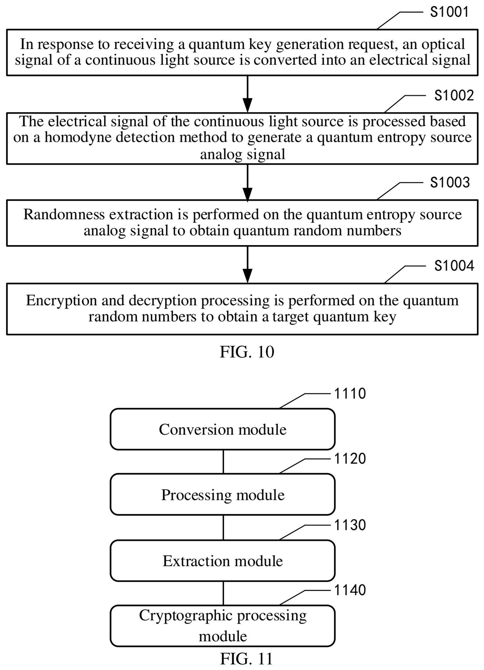

FIG. 10 shows a flowchart of a method for generating a quantum key based on quantum random numbers according to an embodiment of the present disclosure.

As shown in FIG. 10, the method includes operation S1001 to operation S1004.

In operation S1001, in response to receiving a quantum key generation request, an optical signal of a continuous light source is converted into an electrical signal.

In operation S1002, the electrical signal of the continuous light source is processed based on a homodyne detection method to generate a quantum entropy source analog signal.

In operation S1003, randomness extraction is performed on the quantum entropy source analog signal to obtain quantum random numbers.

In operation S1004, encryption and decryption processing is performed on the quantum random numbers to obtain a target quantum key.

FIG. 11 shows a block diagram of an apparatus for generating a quantum key based on quantum random numbers according to an embodiment of the present disclosure.

As shown in FIG. 11, the apparatus for generating a quantum key based on quantum random numbers includes a conversion module 1110, a processing module 1120, an extraction module 1130, and a cryptographic processing module 1140.

The conversion module 1110 is configured to, in response to receiving a quantum key generation request, convert an optical signal of a continuous light source into an electrical signal.

The processing module 1120 is configured to process the electrical signal of the continuous light source based on a homodyne detection method to generate a quantum entropy source analog signal.

The extraction module 1130 is configured to perform randomness extraction on the quantum entropy source analog signal to obtain quantum random numbers.

The cryptographic processing module 1140 is configured to perform encryption and decryption processing on the quantum random numbers to obtain a target quantum key.

Any number of the modules, submodules, units and subunits according to embodiments of the present disclosure, or at least part of functions of any number of them may be implemented in one module. Any one or more of the modules, submodules, units and subunits according to embodiments of the present disclosure may be split into a plurality of modules for implementation. Any one or more of the modules, submodules, units and subunits according to embodiments of the present disclosure may be implemented at least partially as a hardware circuit, such as a field programmable gate array (FPGA), a programmable logic array (PLA), a system on a chip, a system on a substrate, a system on a package, an application specific integrated circuit (ASIC), or may be implemented by hardware or firmware in any other reasonable manner of integrating or encapsulating the circuit, or may be implemented by any one of three implementation modes of software, hardware and firmware or an appropriate combination thereof. Alternatively, one or more of the modules, submodules, units and subunits according to embodiments of the present disclosure may be at least partially implemented as a computer program module that, when executed, performs the corresponding functions.

For example, any number of the conversion module 1110, the processing module 1120, the extraction module 1130, and the cryptographic processing module 1140 may be combined into one module/unit/subunit for implementation, or any one of the modules/units/subunits may be divided into a plurality of modules/units/subunits. Alternatively, at least part of the functions of one or more of these modules/units/subunits may be combined with at least part of the functions of other modules/units/subunits and implemented in one module/unit/subunit. According to embodiments of the present disclosure, at least one of the conversion module 1110, the processing module 1120, the extraction module 1130, and the cryptographic processing module 1140 may be implemented at least partially as a hardware circuit, such as a field programmable gate array (FPGA), a programmable logic array (PLA), a system on a chip, a system on a substrate, a system on a package, an application specific integrated circuit (ASIC), or may be implemented by hardware or firmware in any other reasonable manner of integrating or encapsulating the circuit, or may be implemented by any one of the three implementation modes of software, hardware and firmware or an appropriate combination thereof. Alternatively, at least one of the conversion module 1110, the processing module 1120, the extraction module 1130, and the cryptographic processing module 1140 may be at least partially implemented as a computer program module that may perform corresponding functions when executed.

It should be noted that the portion describing the apparatus for generating a quantum key based on quantum random numbers in embodiments of the present disclosure corresponds to the portion describing the method for generating a quantum key based on quantum random numbers in embodiments of the present disclosure. For the descriptions of the apparatus for generating a quantum key based on quantum random numbers, reference may be made to the method for generating a quantum key based on quantum random numbers, and details are omitted here.

It may be understood by those skilled in the art that the features recorded in the various embodiments of the present disclosure may be combined and/or integrated in various ways, even if such combinations and/or integrations are not explicitly recorded in the present disclosure. In particular, without departing from the spirit and teaching of the present disclosure, the features recorded in the various embodiments of the present disclosure may be combined and/or integrated in various ways. All such combinations and/or integrations fall within the scope of the present disclosure.

The embodiments of the present disclosure have been described above. However, these embodiments are for the purpose of illustration only and are not intended to limit the scope of the present disclosure. Although the embodiments have been described above separately, it does not mean that the measures in the various embodiments cannot be used advantageously in combination. Without departing from the scope of the present disclosure, various substitutions and modifications may be made by those skilled in the art, and such substitutions and modifications should fall within the scope of the present disclosure.

Further, the invention is defined by the following clauses.

Clause 1: A method for fabricating a quantum random number security chip, comprising:

providing (S101) a quantum entropy source die and a security processing module (2) on a first surface of a substrate (3) and a second surface of the substrate (3) respectively to form a three-dimensional stacked structure, wherein a plurality of copper pillars are disposed on the second surface of the substrate (3);
performing (S102) a molding process on the first surface of the substrate (3) and the second surface of the substrate (3) to obtain an encapsulation structure encapsulating the substrate (3), wherein the plurality of copper pillars have bumps exposed outside the encapsulation structure; and
rerouting (S103) a substrate pad disposed on the second surface of the substrate (3) to a fan-out region of the substrate (3) by using a wafer-level fan-out method, such that the bumps of the plurality of copper pillars exposed outside the encapsulation structure serve as external pins of the quantum random number security chip, obtaining the quantum random number security chip.

Clause 2: The method of clause 1, wherein the security processing module (2) comprises a security processor die and a signal amplifier die, and the providing (S101) a quantum entropy source die and a security processing module (2) on a first surface of a substrate (3) and a second surface of the substrate (3) respectively comprises:
providing the security processor die and the signal amplifier die on the second surface of the substrate (3), such that a bonding pad of the security processor die and a bonding pad of the signal amplifier die face the same direction as the substrate pad disposed on the second surface of the substrate (3).

Clause 3: The method of clause 2, further comprising:
bonding a bonding pad of the quantum entropy source die, the bonding pad of the security processor die, and the bonding pad of the signal amplifier die to the plurality of copper pillars respectively by using a bonding process.

Clause 4: The method of clause 1, further comprising:

implanting a solder ball onto the substrate pad disposed on the second surface of the substrate (3) in a case where the encapsulation structure has a leadless package form; and
providing a metal lead on the substrate pad disposed on the second surface of the substrate (3) to establish a connection between the quantum random number security chip and an external circuit in a case where the encapsulation structure has a flat lead package form.

Clause 5: The method of clause 1, wherein a material of the substrate (3) comprises an epoxy resin material.

Clause 6: A quantum random number security chip fabricated by the method of any one of clauses 1 to 5, wherein the quantum random number security chip comprises a quantum entropy source chip (1) and a security processing module (2) connected to each other;

wherein the quantum entropy source chip (1) is configured to convert an optical signal of a continuous light source into an electrical signal, and process the electrical signal based on a homodyne detection method to generate a quantum entropy source analog signal; and

wherein the security processing module (2) is configured to perform randomness extraction on the quantum entropy source analog signal generated by the quantum entropy source chip (1) to obtain quantum random numbers, and perform encryption and decryption processing on the quantum random numbers to obtain a target quantum key.

Clause 7: The quantum random number security chip of clause 6, wherein the quantum entropy source chip (1) comprises a light source generation unit (11), an optical beam splitter (13), a photodetector (14, 15), and a transimpedance amplifier (16) connected in sequence,

wherein the light source generation unit (11) is configured to generate the continuous light source and input the continuous light source to the optical beam splitter (13);

wherein the optical beam splitter (13) is configured to split the continuous light source into two paths and input the two paths to the photodetector (14, 15) respectively, wherein a first input end of the optical beam splitter (13) is configured to receive the continuous light source, and a second input end of the optical beam splitter (13) is left unconnected to serve as a vacuum state input end;

wherein the photodetector (14, 15) comprises a first photodetector (14) and a second photodetector (15) respectively configured to convert the optical signal of the continuous light source into a first electrical signal and a second electrical signal, so as to perform a homodyne detection on the first electrical signal and the second electrical signal to obtain a current difference between output signals; and

wherein the transimpedance amplifier (16) is configured to amplify the current difference between the output signals to obtain the quantum entropy source analog signal.

Clause 8: The quantum random number security chip of clause 7, wherein the security processing module (2) comprises a signal amplifier chip (21) and a security processor chip (22), an input end of the signal amplifier chip (21) is connected to an output end of the transimpedance amplifier (16) within the quantum entropy source chip (1), and an output end of the signal amplifier chip (21) is connected to an input end of the security processor chip (22);

wherein the signal amplifier chip (21) is configured to receive the quantum entropy source analog signal and amplify the quantum entropy source analog signal to obtain a quantum entropy source random signal; and

wherein the security processor chip (22) comprises an analog-to-digital converter (24), a digital-to-analog converter (23), a randomness extraction unit, and an encryption processing unit, wherein the analog-to-digital converter (24) is configured to convert the quantum entropy source random signal into a digital signal and send the digital signal for the quantum entropy source random signal to the randomness extraction unit; the randomness extraction unit is configured to perform randomness extraction on the digital signal for the quantum entropy source random signal to generate quantum random numbers; and the encryption processing unit is configured to perform encryption and decryption processing on the quantum random numbers to obtain the target quantum key.

Clause 9: The quantum random number security chip of clause 8, wherein the target quantum key comprises any one of: a shared key pair for symmetric cryptography, a public-private key pair for asymmetric cryptography, or a temporary key for hybrid cryptography.

Clause 10: A method for generating a quantum key based on quantum random numbers, applicable to the quantum random number security chip of any one of clauses 6 to 9, comprising:

in response to receiving a quantum key generation request, converting (S1001) an optical signal of a continuous light source into an electrical signal;

processing (S1002) the electrical signal of the continuous light source based on a homodyne detection method to generate a quantum entropy source analog signal;

performing (S1003) randomness extraction on the quantum entropy source analog signal to obtain quantum random numbers; and

performing (S1004) encryption and decryption processing on the quantum random numbers to obtain a target quantum key.

**Claims**

1.  A method for fabricating a quantum random number security chip, comprising:

    providing (S101) a quantum entropy source die and a security processing module (2) on a first surface of a substrate (3) and a second surface of the substrate (3) respectively to form a three-dimensional stacked structure, wherein a plurality of copper pillars are disposed on the second surface of the substrate (3);

    dispensing molding materials onto the first surface of the substrate (3) and the second surface of the substrate (3) by using a molding process to obtain a double-sided encapsulation structure that encapsulates the substrate (3);

    grinding an encapsulation layer on the second surface of the substrate (3) until bumps of the plurality of copper pillars are exposed from the encapsulation layer; and

    rerouting (S103) a substrate pad disposed on the second surface of the substrate (3) to a fan-out region of the substrate (3) by using a wafer-level fan-out method, to form a redistribution layer (4) on a surface of the encapsulation structure, and rearrange new pads included in the redistribution layer (4) such that the substrate pad covered by the encapsulation structure is connected, via the redistribution layer (4), to the new pads located in the fan-out region around the substrate, such that the bumps of the plurality of copper pillars exposed outside the encapsulation structure serve as external pins of the quantum random number security chip, obtaining the quantum random number security chip.

2.  The method of claim 1, wherein the security processing module (2) comprises a security processor die and a signal amplifier die, and the providing (S101) a quantum entropy source die and a security processing module (2) on a first surface of a substrate (3) and a second surface of the substrate (3) respectively comprises:

    providing the security processor die and the signal amplifier die on the second surface of the substrate (3), such that a bonding pad of the security processor die and a bonding pad of the signal amplifier die face the same direction as the substrate pad disposed on the second surface of the substrate (3).

3.  The method of claim 2, further comprising:

    bonding a bonding pad of the quantum entropy source die, the bonding pad of the security processor die, and the bonding pad of the signal amplifier die to the plurality of copper pillars respectively by using a bonding process.

4.  The method of claim 1, further comprising:

    implanting a solder ball onto the substrate pad disposed on the second surface of the substrate (3) in a case where the encapsulation structure has a leadless package form; and

    providing a metal lead on the substrate pad disposed on the second surface of the substrate (3) to establish a connection between the quantum random number security chip and an external circuit in a case where the encapsulation structure has a flat lead package form.

5.  The method of claim 1, wherein a material of the substrate (3) comprises an epoxy resin material.

6.  A quantum random number security chip fabricated by the method of any one of claims 1 to 5, wherein the quantum random number security chip comprises a quantum entropy source chip (1) and a security processing module (2) connected to each other;

    wherein the quantum entropy source chip (1) is configured to convert an optical signal of a continuous light source into an electrical signal, and process the electrical signal based on a homodyne detection method to generate a quantum entropy source analog signal; and

    wherein the security processing module (2) is configured to perform randomness extraction on the quantum entropy source analog signal generated by the quantum entropy source chip (1) to obtain quantum random numbers, and perform encryption and decryption processing on the quantum random numbers to obtain a target quantum key.

7.  The quantum random number security chip of claim 6, wherein the quantum entropy source chip (1) comprises a light source generation unit (11), an optical beam splitter (13), a photodetector (14, 15), and a transimpedance amplifier (16) connected in sequence,

wherein the light source generation unit (11) is configured to generate the continuous light source and input the continuous light source to the optical beam splitter (13);

wherein the optical beam splitter (13) is configured to split the continuous light source into two paths and input the two paths to the photodetector (14, 15) respectively, wherein a first input end of the optical beam splitter (13) is configured to receive the continuous light source, and a second input end of the optical beam splitter (13) is left unconnected to serve as a vacuum state input end;

wherein the photodetector (14, 15) comprises a first photodetector (14) and a second photodetector (15) respectively configured to convert the optical signal of the continuous light source into a first electrical signal and a second electrical signal, so as to perform a homodyne detection on the first electrical signal and the second electrical signal to obtain a current difference between output signals; and

wherein the transimpedance amplifier (16) is configured to amplify the current difference between the output signals to obtain the quantum entropy source analog signal.

8. The quantum random number security chip of claim 7, wherein the security processing module (2) comprises a signal amplifier chip (21) and a security processor chip (22), an input end of the signal amplifier chip (21) is connected to an output end of the transimpedance amplifier (16) within the quantum entropy source chip (1), and an output end of the signal amplifier chip (21) is connected to an input end of the security processor chip (22);

wherein the signal amplifier chip (21) is configured to receive the quantum entropy source analog signal and amplify the quantum entropy source analog signal to obtain a quantum entropy source random signal; and

wherein the security processor chip (22) comprises an analog-to-digital converter (24), a digital-to-analog converter (23), a randomness extraction unit, and an encryption processing unit, wherein the analog-to-digital converter (24) is configured to convert the quantum entropy source random signal into a digital signal and send the digital signal for the quantum entropy source random signal to the randomness extraction unit; the randomness extraction unit is configured to perform randomness extraction on the digital signal for the quantum entropy source random signal to generate quantum random numbers; and the encryption processing unit is configured to perform encryption and decryption processing on the quantum random numbers to obtain the target quantum key.

9. The quantum random number security chip of claim 8, wherein the target quantum key comprises any one of: a shared key pair for symmetric cryptography, a public-private key pair for asymmetric cryptography, or a temporary key for hybrid cryptography.

10. A method for generating a quantum key based on quantum random numbers, applicable to the quantum random number security chip of any one of claims 6 to 9, comprising:

in response to receiving a quantum key generation request, converting (S1001) an optical signal of a continuous light source into an electrical signal;

processing (S1002) the electrical signal of the continuous light source based on a homodyne detection method to generate a quantum entropy source analog signal;

performing (S1003) randomness extraction on the quantum entropy source analog signal to obtain quantum random numbers; and

performing (S1004) encryption and decryption processing on the quantum random numbers to obtain a target quantum key.

S101

A quantum entropy source die and a security processing module are provided on a first surface of a substrate and a second surface of the substrate respectively to form a three-dimensional stacked structure

S102

A molding process is performed on the first surface of the substrate and the second surface of the substrate to obtain an encapsulation structure that encapsulates the substrate

S103

A substrate pad disposed on the second surface of the substrate is rerouted to a fan-out region of the substrate using a wafer-level fan-out method, such that bumps of a plurality of copper pillars exposed outside the encapsulation structure serve as external pins of the quantum random number security chip, thereby obtaining a quantum random number security chip

FIG. 1

5

Encapsulation layer

1

Quantum entropy source chip

2

Security processing module

Substrate

3

41

Redistribution layer

4

42

FIG. 2

FIG. 3

FIG. 4

FIG. 5

Symmetric encryption process (taking CBC mode as an example)

| Plaintext block 1 | Plaintext block 2 | Plaintext block 3 | Plaintext block 4 |

Initialization vector IV → ⊕ XOR ⊕ XOR ⊕ XOR ⊕ XOR

Quantum random number generator

Key →

| Encrypt | Encrypt | Encrypt | Encrypt |

Secure storage area

| Ciphertext block 1 | Ciphertext block 2 | Ciphertext block 3 | Ciphertext block 4 |

FIG. 6

Symmetric decryption process (taking CBC mode as an example)

| Plaintext block 1 | Plaintext block 2 | Plaintext block 3 | Plaintext block 4 |

Initialization vector IV → ⊕ XOR ⊕ XOR ⊕ XOR ⊕ XOR

| Decrypt | Decrypt | Decrypt | Decrypt |

Secure storage area

Key →

| Ciphertext block 1 | Ciphertext block 2 | Ciphertext block 3 | Ciphertext block 4 |

FIG. 7

Asymmetric key pair generation process
(taking RSA algorithm as an example)

No, regenerate

Random
number P

Quantum
random number
generator

Random
number Q

Is it
a prime
number?

Yes

Generate
key pair via
RSA

Public key
(e,n)

Private
key (d,n)

FIG. 8

Asymmetric Key Pair Generation Process
(Taking SM2 Algorithm as an Example)

Quantum random number generator → Random number d → Secure elliptic curve authenticated via SM2 → Public key P

Secure elliptic curve authenticated via SM2 → Private key d

FIG. 9

S1001

In response to receiving a quantum key generation request, an optical signal of a continuous light source is converted into an electrical signal

S1002

The electrical signal of the continuous light source is processed based on a homodyne detection method to generate a quantum entropy source analog signal

S1003

Randomness extraction is performed on the quantum entropy source analog signal to obtain quantum random numbers

S1004

Encryption and decryption processing is performed on the quantum random numbers to obtain a target quantum key

FIG. 10

1110

Conversion module

1120

Processing module

1130

Extraction module

1140

Cryptographic processing module

FIG. 11